(19) Europäisches Patentamt
European Patent Office
Office européen des brevets

(11) EP 2 832 815 A1

# (12) EUROPEAN PATENT APPLICATION

(43) Date of publication:
**04.02.2015 Bulletin 2015/06**

(51) Int Cl.:
***C09K 8/72*** *(2006.01)* ***C09K 8/74*** *(2006.01)*

(21) Application number: **14178660.8**

(22) Date of filing: **25.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.07.2013 US 201313955521**

(71) Applicants:
- **Services Petroliers Schlumberger**
**75007 Paris (FR)**
Designated Contracting States:
**FR**
- **Schlumberger Holdings Limited**
**Tortola 1110 (VG)**
Designated Contracting States:
**GB NL**
- **SCHLUMBERGER TECHNOLOGY B.V.**
**2514 JG Den Haag (NL)**
Designated Contracting States:
**AL AT BE BG CH CY CZ DE DK EE ES FI GR HR HU IE IS IT LI LT LU LV MC MK MT NO PL PT RO RS SE SI SK SM TR**

(72) Inventors:
- **Jiang, Li**
**Katy, TX Texas 77494 (US)**
- **Lecerf, Bruno**
**Houston, TX 77035 (US)**
- **Ziauddin, Murtaza**
**Katy, TX Texas 77494 (US)**
- **He, Jian**
**Sugar Land, TX Texas 77479 (US)**
- **Dang, Boingoc**
**Channelview, TX Texas 77530 (US)**

(74) Representative: **Ford, Michael Frederick**
**Schlumberger Cambridge Research Limited**
**High Cross**
**Madingley Road**
**Cambridge CB3 0EL (GB)**

## (54) Viscosified acid fluid and method for use thereof

(57) A method includes providing an oilfield treatment fluid including an aqueous HCl solution having greater than 15% HCl by weight, and a fixing agent (FA) in a molar ratio of FA:HCl of between 0.5 and 2.5 inclusive. The FA is urea and/or a urea derivative. The oilfield treatment fluid further includes a viscosifying agent that is not a plant-based polysaccharide gum. The method further includes providing the oilfield treatment fluid to a high pressure pump, and operating the high pressure pump to treat a formation fluidly coupled to a wellbore.

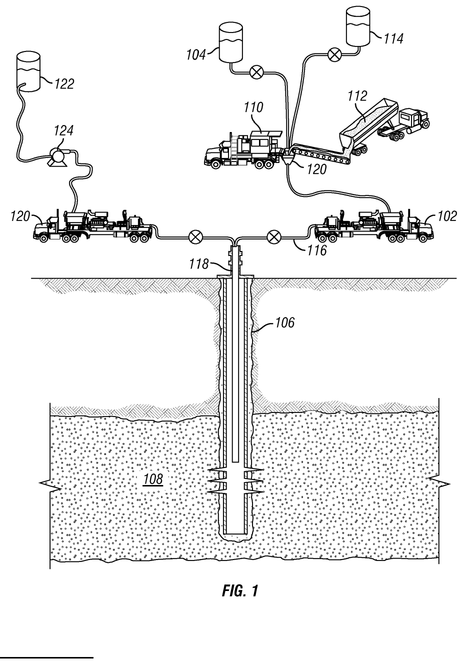

FIG. 1

EP 2 832 815 A1

**Description**

BACKGROUND

The statements in this section merely provide background information related to the present disclosure and may not constitute prior art.

The technical field generally, but not exclusively, relates to high concentration of hydrochloric acid (HCl) solutions with urea, and uses thereof. Previously known solutions of HCl with urea, for example as described in U.S. Patent 4,466,893, utilize urea with low concentrations of HCl (at or below 15%) and in the presence of various plant-based polysaccharide gums. HCl above 15% was determined to be deleterious to the properties of previously available solutions.

SUMMARY

Embodiments pertain to aqueous solutions having a concentration of HCl exceeding 15% by weight, further including urea and/or a urea derivative, and being substantially free of polysaccharides. Other embodiments include methods to prepare acid-urea solutions and treat oilfield formations. This summary is provided to introduce a selection of concepts that are further described below in the illustrative embodiments. This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

**BRIEF DESCRIPTION OF THE DRAWINGS**

FIG. 1 depicts example equipment to treat a wellbore and/or a formation fluidly coupled to the wellbore with a viscosified acid fluid.

FIG. 2 depicts illustrative data showing comparative PVBT data between an HCl solution with and without a Fixing Agent.

**DETAILED DESCRIPTION OF SOME ILLUSTRATIVE EMBODIMENTS**

For the purposes of promoting an understanding of the principles of the disclosure, reference will now be made to the embodiments illustrated in the drawings and specific language will be used to describe the same. It will nevertheless be understood that no limitation of the scope of the claimed subject matter is thereby intended, any alterations and further modifications in the illustrated embodiments, and any further applications of the principles of the application as illustrated therein as would normally occur to one skilled in the art to which the disclosure relates are contemplated herein.

At the outset, it should be noted that in the development of any such actual embodiment, numerous implementation-specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the compositions used/disclosed herein can also comprise some components other than those cited. In the summary and this detailed description, each numerical value should be read once as modified by the term "about" (unless already expressly so modified), and then read again as not so modified unless otherwise indicated in context. Also, in the summary and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that the Applicant appreciates and understands that any and all data points within the range are to be considered to have been specified, and that the Applicant possessed knowledge of the entire range and all points within the range.

The term "a viscosifying agent present in an effective amount" as utilized herein should be understood broadly. An example viscosifying agent includes any agent that develops viscosity in a fluid, including at least polymers and/or viscoelastic surfactants (VES). The amount that is an effective amount is dependent upon the application of the fluid. An example effective amount includes an amount sufficient to provide the desired fluid rheology for pumping and fluid placement. Examples include a viscosity sufficient to provide a desired fracture geometry generation profile (e.g. sufficient width and/or appropriate height response), an amount that provides sufficient leakoff control (e.g. through leakoff fluid

viscosity control and/or wall building by the viscosifying agent), and/or an amount of viscosifying agent sufficient to provide a desired viscosity after a time at temperature, after a shear profile provided to the fluid to deliver the fluid to a formation fluidly coupled to a wellbore, after an exposure time to a breaker material provided in the fluid, and/or a desired viscosity at shear, flow, and fluid exposure (e.g. formation fluid and/or fluid from other stages of a treatment) conditions expected or observed to be present during the treatment. Another example includes a viscosity sufficient to carry and/or deliver proppant, flowback control, fluid diversion, and/or other particulate components of a fluid to the formation and/or to desired positions within the formation. The amount of a viscosifying agent that is an effective amount may vary between stages of a treatment and/or within stages of a treatment. The selection of a viscosifying agent and an effective amount of the viscosifying agent is a mechanical step for one of skill in the art having the benefit of the disclosures herein, and having information about a formation and the planned treatment that would generally be readily available to one of skill in the art, such as pump and shear rates, fracture generation fluid requirements, downhole temperatures, and/or treatment fluid temperature trajectory. Some values may be determined through ordinary testing (e.g. fluid rheology) of the type routinely performed in the art.

The term plant-based polysaccharide gum includes polymers having a base material sourced from plants, including galactomannans such as guar gum, gum karaya, gum tragacanth, gum ghatti, gum acacia, gum konjak, shariz, locus, psyllium, tamarind, gum tara, carrageenan, gum kauri, and modified guars such as hydroxy-propyl guar, hydroxy-ethyl guar, carboxy-methyl hydroxy-ethyl guar, and carboxy-methyl hydroxy-propyl guar. In certain embodiments, a plant-based polysaccharide gum does not include a cellulose based polymer, including at least cellulose, hydroxy-ethyl cellulose (HEC), and/or carboxy-methyl-hydroxy-ethyl cellulose (CMHEC). In certain embodiments, a plant-based polysaccharide gum does not include xanthan gum. In certain embodiments, a plant-based polysaccharide gum includes materials wherein the polymer backbone exhibits a breakdown of viscosity in the presence of HCl and/or HF such that performing a successful treatment at high HCl fractions (e.g. exceeding 15% HCl by weight in the aqueous phase of the fluid) is not possible or not commercially viable, including at least galactomannans such as guar gum, gum karaya, gum tragacanth, gum ghatti, gum acacia, gum konjak, shariz, locus, psyllium, tamarind, gum tara, carrageenan, gum kauri, and modified guars such as hydroxy-propyl guar, hydroxy-ethyl guar, carboxy-methyl hydroxy-ethyl guar, and carboxy-methyl hydroxy-propyl guar. In certain embodiments, a "plant-based polysaccharide gum" is not sourced from a plant material (e.g. a synthetically produced polymer having a molecular composition equivalent to guar, etc.), and additionally or alternatively a polymer or other viscosifier that is not a "plant-based polysaccharide gum" is sourced from a plant material (e.g. cellulose and/or a polymer produced by a genetically modified plant). An example embodiment includes a "plant-based polysaccharide gum" specifically including galactomannans such as guar gum, gum karaya, gum tragacanth, gum ghatti, gum acacia, gum konjak, shariz, locus, psyllium, tamarind, gum tara, carrageenan, gum kauri, and modified guars such as hydroxy-propyl guar, hydroxy-ethyl guar, carboxy-methyl hydroxy-ethyl guar, and carboxy-methyl hydroxy-propyl guar, and specifically excluding acrylamide based polymers, sulfonated polymers, xanthan gum, diutan, scleroglucan, a VES, and/or a cellulose based polymer.

The term formation as utilized herein should be understood broadly. A formation includes any underground fluidly porous formation, and can include without limitation any oil, gas, condensate, mixed hydrocarbons, paraffin, kerogen, water, and/or $CO_2$ accepting or providing formations. A formation can be fluidly coupled to a wellbore, which may be an injector well, a producer well, and/or a fluid storage well. The wellbore may penetrate the formation vertically, horizontally, in a deviated orientation, or combinations of these. The formation may include any geology, including at least a sandstone, limestone, dolomite, shale, tar sand, and/or unconsolidated formation. The wellbore may be an individual wellbore and/or a part of a set of wellbores directionally deviated from a number of close proximity surface wellbores (e.g. off a pad or rig) or single initiating wellbore that divides into multiple wellbores below the surface.

The term "oilfield treatment fluid" as utilized herein should be understood broadly. In certain embodiments, an oilfield treatment fluid includes any fluid having utility in an oilfield type application, including a gas, oil, geothermal or injector well. In certain embodiments, an oilfield treatment fluid includes any fluid having utility in any formation or wellbore described herein. In certain embodiments, an oilfield treatment fluid includes a matrix acidizing fluid, a wellbore cleanup fluid, a pickling fluid, a near wellbore damage cleanup fluid, a surfactant treatment fluid, a viscosified fracture fluid, and/or any other fluid consistent with the fluids otherwise described herein. The viscosified fluids described herein may be utilized in a fracturing treatment, and/or the viscosity generated may enable or improve other types of treatments. An oilfield treatment fluid may include any type of additive known in the art, which are not listed herein for purposes of clarity of the present description, but which may include at least friction reducers, inhibitors, surfactants and/or wetting agents, fluid diverting agents, particulates, acid retarders (except where otherwise provided herein), organic acids, chelating agents, energizing agents (e.g. $CO_2$ or $N_2$), gas generating agents, solvents, emulsifying agents, flowback control agents, resins, and/or breakers.

The term "high pressure pump" as utilized herein should be understood broadly. In certain embodiments, a high pressure pump includes a positive displacement pump that provides an oilfield relevant pumping rate - for example at least 0.5 barrels per minute (bpm), although the specific example is not limiting. A high pressure pump includes a pump capable of pumping fluids at an oilfield relevant pressure, including at least 500 psi, at least 1,000 psi, at least

2,000 psi, at least 5,000 psi, at least 10,000 psi, up to 15,000 psi, and/or at even greater pressures. Pumps suitable for oilfield cementing, matrix acidizing, and/or hydraulic fracturing treatments are available as high pressure pumps, although other pumps may be utilized.

The term "treatment concentration" as utilized herein should be understood broadly. A treatment concentration in the context of an HCl concentration is a final concentration of the fluid before the fluid is positioned in the wellbore and/or the formation for the treatment. The treatment concentration may be the mix concentration available from the HCl containing fluid at the wellsite or other location where the fluid is provided from. The treatment concentration may be modified by dilution before the treating and/or during the treating. Additionally, the treatment concentration may be modified by the provision of additives to the fluid. Example and non-limiting treatment concentrations include 7.5%, 15%, 20%, 28%, 36%, and/or up to 45.7% HCl concentration in the fluid. In certain embodiments, a treatment concentration is determined upstream of additives deliver (e.g. at a blender, hopper, or mixing tub) and the concentration change from the addition of the additives is ignored. In certain embodiments, the treatment concentration is a liquid phase or acid phase concentration of a portion of the final fluid - for example when the fluid is an energized or emulsified fluid. In certain embodiments the treatment concentration exceeds 15%. In certain embodiments, the fluid concentration exceeds 36% or exceeds 37%.

The term "high surface area particles" as utilized herein should be understood broadly. In certain embodiments, a high surface area particle is a particle having a complex or porous surface which provides a greater surface area than a simple geometrical particle. An example high surface particle is a porous particle, a metal organic framework, a particle having greater than 100 $m^2/g$, greater than 500 $m^2/g$, greater than 1000 $m^2/g$, and/or greater than 10,000 $m^2/g$. Zeolites, clays, and/or materials suited for catalytic reactions can also be formulated to be high surface area particles.

The term "urea derivative" as used herein should be understood broadly. An example urea derivative includes any urea compound having at least one of the four nitrogen bonded hydrogens substituted. The substitution products may be anything, but include at least any hydrocarbon group, and may include substitutions on one or both of the urea nitrogens. Additionally or alternatively, substitutions may include cyclic groups (e.g. ethylene urea), aromatic groups, and/or nitrogen containing hydrocarbon groups. The inclusion of a urea derivative in the present disclosure should not be read as limiting to other urea derivatives which may be used as an alternative or addition.

An example oilfield treatment fluid includes HCl present in an amount that is greater than 15% and up to 45.7% by weight, inclusive. The oilfield treatment fluid further includes a fixing agent (FA) which is urea and/or a urea derivative. The fluid further includes a viscosifying agent present in an effective amount, where the viscosifying agent is not a plant-based polysaccharide gum. The FA in the example fluid is present in an amount that is a molar ratio of FA:HCl of between 0.5 and 2.5 inclusive. The effective amount of the viscosifying agent is dependent upon the purpose of the oilfield treatment fluid, as described preceding, and includes at least sufficient amounts of the viscosifying agent to support the purpose of the oilfield treatment fluid under the expected conditions including pump rates, exposure to shear, temperature, and fluids in the wellbore and formation. Example and non-limiting effective amounts of the viscosifying agent include amounts sufficient to provide at least 25 cP, at least 30 cP, at least 70 cP, at least 100 cP, at least 400 cP, and/or at least 800 cP in the aqueous phase portion of the un-crosslinked oilfield treatment fluid. The oilfield treatment fluid referencing the un-crosslinked oilfield treatment fluid does not limit the formulation of the oilfield treatment fluid, which may cross-linked or not cross-linked at any time during a treatment utilizing the oilfield treatment fluid. An example effective amount of the viscosifying agent includes an amount sufficient to provide a desired proppant settling time for a target proppant and/or for a selected proppant (e.g. a standardized proppant), and/or a desired particle settling time for a selected particle type (including density, size, and/or shape).

Example and non-limiting viscosifying agents include an acrylamide containing polymer, a sulfonated polymer, xanthan gum, diutan, scleroglucan, a VES, a cationic polyacrylamide, a sulfonated synthetic polymer slurry, and an acrylamide copolymer emulsion. In certain embodiments, a viscosifying agent includes a cellulose based polymer, which may include at least cellulose, HEC, and/or CMHEC.

An example oilfield treatment fluid includes the HCl present in an amount of at least 20% by weight, where the FA:HCl molar ratio in the fluid is at least 1, and where the oilfield treatment fluid exhibits a linear fluid viscosity that is at least 2.5 times greater than a baseline linear fluid viscosity. The baseline linear fluid viscosity is a fluid viscosity of an equivalent fluid, lacking the FA in the solution. An example oilfield treatment fluid includes the viscosifying agent being xanthan gum, where the FA:HCl molar ratio in the fluid is at least 1, and where the oilfield treatment fluid exhibits a linear gel viscosity that exceeds 400 cP.

A number of example viscosified fluid formulations are depicted following. The specific formulations created demonstrate certain aspects of the present disclosure, the formulations are non-limiting examples. The formulations depicted were created by creating a 20% HCl solution (by weight) for the "baseline" example, and by creating a 10% HCl solution for the "half baseline" example. The "20% with FA" formulations included 20% HCl with a FA:HCl molar ratio of 1:1, and the "10% with FA" formulations included 10% HCl with a FA:HCl molar ratio of 1:1. The viscosifying agent in the solutions of Table 1 was present in an amount of 25 ppt (25 pounds of viscosifying agent per thousand gallons of solution) for dry viscosifying agents, and present in an amount to provide 25 ppt of the active viscosifying

species for liquid viscosifying agents. The solutions in Table 1 were prepared by mixing 100 mL of solution, including the HCl, mixing the solution for 2 minutes at ambient temperature, providing a standard 20/40 mesh proppant into the solution at the end of the mixing period, and observing the settling time of the proppant in the solution within a 100 mL graduated cylinder. The viscosities stated in Table 1 were determined according to Stokes law from the proppant setting time, as depicted in Equation 1:

$$\mu = \frac{gd^2(\rho_p - \rho_m)}{18V_t} \qquad \text{Eq. 1}$$

In equation 1, $\mu$ is the viscosity of the fluid in cP, g is the acceleration of gravity (m/s$^2$), *d* is the particle diameter in meters, $\rho_p$ is the particle density in kg/m$^3$, $\rho_m$ is the density of the fluid in kg/m$^3$, and $V_t$ is the particle fall velocity in m/s. Referencing Table 1, a number of formulations are depicted.

As shown in Table 1 following, the 20% HCl solutions showed significantly greater overall viscosity enhancement in most instances with the FA present, the results between the 20% HCl and 10% HCl example solutions are not directly comparable for certain purposes, as the 20% HCl solutions include twice the amount of FA (due to the 1:1 molar ratio) relative to the 10% HCl solutions. The amount of FA in the solution may be significantly greater or significantly lower than the amount present in the solutions depicted in Table 1. Similarly, the amount of viscosifying agent present in the solution may be significantly greater or lower than the 25 ppt solutions provided in Table 1.

Table 1. Observed viscosities in 20% (Baseline) or 10% (Half Baseline) HCl (cP)

| Viscosifying agent | Baseline | 20% with FA | Half Baseline | 10% with FA |
|---|---|---|---|---|
| Cationic polyacrylamide | 57 | 73 | 42 | 78 |
| Sulfonated synthetic polymer slurry | 10 | 29 | 10 | 26 |
| Carboxymethyl hydroxyethyl cellulose | 10 | 32 | 18 | 21 |
| Xanthan gum | 170 | 840 | 365 | 426 |
| Acrylamide copolymer emulsion | 26 | 38 | 24 | 34 |
| Diutan Gum | 14 | 19 | 34 | 36 |

It can be seen from the formulations in Table 1 that all solutions showed improved viscosity retention in the presence of the FA. The viscosity improvement from about 120% to about 490% retained viscosity relative to the formulations lacking a FA. The higher retention amounts in the 20% FA case may be at least partially due to the overall increased FA amount in the solution. It is believed embodiments having HCl amounts lower than 20% would have greater viscosity retention with FA:HCl ratios exceeding 1:1, although in certain embodiments the FA:HCl ratio may be lower than 1:1 and it is believed some improved viscosity retention will still be present.

Referencing Table 2 following, a number of fluid formulations are depicted having various molar ratios of FA:HCl. The fluids depicted in Table 2 are non-limiting examples, and in certain embodiments include fluids prepared before dilution into an oilfield treatment fluid. The fluids depicted in Table 2 do not include a viscosifying agent, but the examples in Table 2 quantify, at a test condition, a retardation factor exhibited by fluids having HCl and FA therein. Without being limited to a particular theory, the retardation of the acid by the FA is believed to be at least partially responsible for the viscosity retention of the HCl and FA fluids, however other factors are believed to be involved, and certain polysaccharides such as guars in the presence of high acid concentrations will nevertheless degrade with time and temperature in the acid.

The selection of a molar ratio of FA:HCl depends upon the specific embodiment, and is a mechanical step for one of skill in the art having the benefit of the disclosures herein. It will be understood that an upper limit of FA is present as the solubility of the FA and HCl in the aqueous solution is reached, and that higher molecular weight FA materials will provide lower molar ratios of FA:HCl at the highest HCl concentrations. In certain embodiments, the FA is selected having a molecular weight below 100 g/mol. Additionally or alternatively, the FA may have a molecular weight below 120 g/mol, below 150 g/mol, below 175 g/mol, or greater than these values.

In certain embodiments, the aqueous solution includes an amount of hydrofluoric acid (HF). HF exhibits distinct reactions from HCl, and is useful in certain applications to enhance the activity of the resulting aqueous solution. For example, HF is utilized in the cleanup of sandstone formations where HCl alone is not effective for removing certain types of formation damage. It is believed that the present aqueous solution will complex with HF similarly to the observed effects with HCl. Accordingly, solutions can be formulated with a total acid amount that is much higher than presently

attainable formulations. In certain embodiments, the HF is present in an amount of at least 0.25% by weight. The HF may be present in an amount of up to 2%, up to 6%, up to 10%, up to 15%, or greater amounts. The HF may be present in addition to the amount of HCl, and/or as a substitution for an amount of the HCl.

Referencing Table 2, the observed retardation factors for a number of aqueous solutions with HCl and a FA are presented therein. Retardation factor indicates the time it took the retarded HCl of equal effective concentration to consume in the presence of certain limestone sample, compared to the case of straight HCl. It is noted that the HCl amounts were between 15% and 28% by weight. However, comparative data above 37% was not possible as such formulations have not been previously attained and a straight acid above 37% was not possible. Nevertheless, it is believed that the retardation effect of the FA observed in the formulations of Table 2 is relevant to formulations having greater than 37% HCl. The retardation factors in Table 2 were determined from reaction rates with a carbonate at 68° F (20°C). Where a very large retardation factor is shown (HIGH), that merely indicates that no observable (by sample weight) reaction had occurred in the time frame of the test. However, the retarded acid in the samples having a (HIGH) showed indicia of reaction, such as by bubble formulation on the surface of the carbonate sample utilized, and the acid therein was active and unspent.

Table 2. Observed retardation factors with certain Fixing Agents

| FA | Mol. Wt. | Structure | FA:HCl | Effective HCl % | Retardation factor |
|---|---|---|---|---|---|
| Urea | 60 | 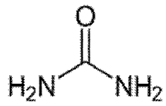 | 2<br>1<br>0.5 | 17<br>23<br>28 | 14<br>16<br>16 |
| 1,1-dimethyl urea | 88 | 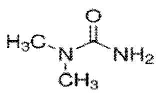 | 1.64<br>0.85<br>0.36 | 15<br>21<br>28 | 9<br>6<br>3 |
| 1,3-dimethyl urea | 88 | 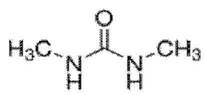 | 1.64<br>0.85<br>0.36 | 15<br>21<br>28 | 15<br>13<br>18 |
| 1,1-diethyl urea | 116 | 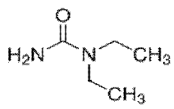 | 1<br>0.5<br>0.3 | 17<br>23<br>27 | 20<br>18<br>12 |
| 1,3-diethyl urea | 116 | 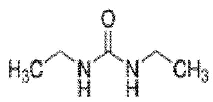 | 1.25<br>0.65<br>0.27 | 15<br>21<br>28 | HIGH<br>HIGH<br>HIGH |
| 1,3-diallyl urea | 140 | 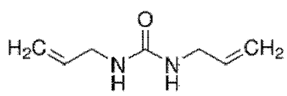 | 1.03<br>0.54<br>0.23 | 15<br>21<br>28 | HIGH<br>HIGH<br>HIGH |
| 1,3-dipropyl urea | 144 | 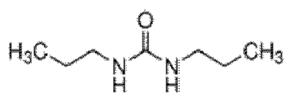 | 1<br>0.52<br>0.22 | 15<br>21<br>28 | HIGH<br>HIGH<br>HIGH |
| 1,3-dibutyl urea | 172 | 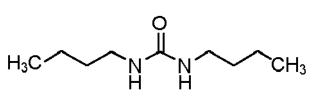 | 0.84<br>0.44<br>0.18 | 15<br>21<br>28 | HIGH<br>HIGH<br>33 |
| 1,1,3,3-tetra methyl urea | 116 | 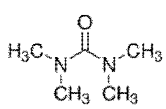 | 1.25<br>0.65<br>0.27 | 15<br>21<br>28 | 33<br>15<br>10 |
| 1,1,3,3-tetra ethyl urea | 172 | 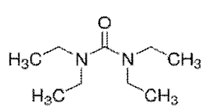 | 0.84<br>0.44<br>0.18 | 15<br>21<br>28 | 20<br>13<br>8 |

(continued)

| FA | Mol. Wt. | Structure | FA:HCl | Effective HCl % | Retardation factor |
|---|---|---|---|---|---|
| 2-aminoethyl urea | 113 | 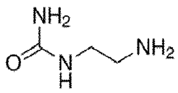 | 1<br>1<br>1 | 15<br>21<br>28 | HIGH<br>HIGH<br>HIGH |

As can be seen in Table 2, a variety of FA and HCl concentrations provide for significant retardation of the HCl activity over HCl without a FA present. It is believed that the retardation of HCl activity continues for concentrations of HCl exceeding 37%, although comparative data is not possible as discussed preceding. In certain embodiments, the retardation is sufficient that usage and handling of the aqueous solution can be performed without additional acid retarders present in the aqueous solution. This can achieve cost savings and environmental improvements relative to acid retarders that may not be as easy to handle and dispose of as urea and urea derivatives. The addition of enough of any material will dilute the acid to a lower concentration and thereby reduce the acid capacity. An acid retarder, as used herein, includes any material that reduces acid intensity through a mechanism other than mere dilution. Non-limiting examples include chelating ligand based retarders, acid internal phase emulsions, and/or surfactant based retarders.

Certain example solutions herein include aqueous solutions having an HCl weight fraction greater than 37%, and certain procedures herein include providing and/or utilizing solutions having an HCl weight fraction greater than 37%. Such solutions are not previously attainable. The following section describes certain non-limiting procedures to provide aqueous solutions having an HCl weight fraction greater than 37%. One of skill it the art having the benefit of the disclosures herein will be able to prepare a solution having an HCl weight fraction greater than 37% using procedure informed by this disclosure but differing from the procedures herein. It is also noted that certain embodiments of the present disclosure include HCl solutions at lower than 37% by weight. Such solutions can be provided by conventional means, with the addition of the FA after the HCl, and/or with the HCl and FA added in any amounts and order until the target solution composition is achieved.

An example aqueous solution includes HCl in a weight fraction exceeding 37%. The aqueous solution includes a fixing agent (FA) provided that allows the HCl fraction to exceed the 37% normally understood to be the limit of HCl solubility at atmospheric pressure. Above 37%, normally, the evolution of HCl gas from the solution prevents the HCl fraction from getting any higher. In certain embodiments, the HCl weight fraction of the aqueous solution may be as high as 45.7%. In certain embodiments, the FA is selected to be 1,3-dimethyl urea and/or ethylene urea, and the HCl weight fraction of the aqueous solution is present at up to 41.1%.

The aqueous solution includes HCl and the FA both in solution. However, the FA and HCl may be added in any order, at least partially. For example, the FA may be dissolved in water, and then the HCl added by any method, such as bubbling HCl gas therethrough. In another example, the HCl is added, at least partially, first and then the FA is added thereafter, with the remaining HCl added with and/or after the FA. In another example, the FA is provided fully or partially as an undissolved solid which dissolves into the aqueous solution as the HCl is added. In certain embodiments, the amount of water present in the aqueous solution is between 0.3 and 1.3 times the amount of the FA, inclusive, by mass.

In certain embodiments, the aqueous solution has a fluid density exceeding 1.2 g/mL. It is noted that conventional 36% HCl at atmospheric pressure has a fluid density of about 1.18 g/mL. In certain embodiments, the fluid density of the aqueous solution may be less than 1.2 g/mL. Fluid densities of various aqueous solutions are depicted in Table 2, although the fluid densities in Table 2 are non-limiting examples.

First example aqueous solutions. A first example set of solutions was prepared in a 250 mL conic flask containing 23 g NaCl powder, with 11 mL 98% $H_2SO_4$ added to the container but physically separated from the NaCl. The vessel was tightly sealed with a 0.25" i.d. tubing connected to the bottom of a tube containing 3 mL $H_2O$. Then 3.0 g urea powder was added to the tube. One example solution added 1.0g of metal-organic framework (MOF) material to the tube, while another example solution did not add the MOF material to the tube. The conic flask was agitated, resulting in controlled mixing of the NaCl and $H_2SO_4$, leading to instant generation of nearly 100%, dry HCl gas which was in turn bubbled at a moderate rate through the $H_2O$ solution in the tube. This process led to the dissolution of urea beyond its normal solubility in water. Without being limited to a theory of operation, it is believed that the adduction between HCl and urea via hydrogen bonding allowed for dissolution of urea beyond the normal solubility limit. At the end of the process, 1.0 mL of the HCl containing solution was weighed to measure its density. In addition, the solution was titrated against 15 % NaOH solution in the presence of a droplet phenolsulfonphthalein indicator, from which the effective concentration of HCl was determined.

Second example aqueous solution. A second example solution was prepared in a 250 mL conic flask containing 23 g NaCl powder, with 11 mL 98% $H_2SO_4$ added to the container but physically separated from the NaCl. The vessel was tightly sealed with a 0.25" i.d. tubing connected to the bottom of a tube containing 3 ml $H_2O$. Then 4.5 g of 1,3-dimethyl urea was added to the tube. The conic flask was agitated, resulting in controlled mixing of the NaCl and $H_2SO_4$,

leading to instant generation of nearly 100%, dry HCl gas which was in turn bubbled at a moderate rate through the $H_2O$ solution in the tube. This process led to the dissolution of 1,3-dimethyl urea beyond its normal solubility in water. At the end of the process, 1.0 mL of the HCl containing solution was weighted to measure its density. In addition, the solution was titrated against 15 % NaOH solution in the presence of a droplet phenolsulfonphthalein indicator, from which the effective concentration of HCl was determined.

Referencing Table 3, a number of experimental solutions are depicted. Each of the solutions depicted were created in a manner consistent with or similar to that described for the first example set of solutions and the second example solution described preceding.

Table 3. Example aqueous solutions

| FA | Beginning solution | Add'l. solid FA | Effective HCl (wt %) | Density (g/mL) |
|---|---|---|---|---|
| Urea | 3mL $H_2O$ | 2.4 g | 41.51 | 1.24 |
| Urea | 3mL $H_2O$ and 3g urea | N/A | 43.05 | 1.22 |
| Urea | 3 mL $H_2O$ | 3g | 44.82 | 1.29 |
| Urea | 3mL $H_2O$ and 3g urea | N/A | 43.91 | 1.27 |
| Urea | 3 mL $H_2O$ and 1g MOF | 3g | 45.72 | 1.45 |
| Urea | 3 mL $H_2O$ | 3.6 g | 43.72 | 1.29 |
| Urea | 3 mL $H_2O$ and 3g urea | 6g | 42.05 | 1.26 |
| 1,3-Dimethyl urea | 3 mL $H_2O$ | 4.5 g | 41.15 | 1.18 |
| Ethylene urea | 3 mL $H_2O$ | 4.5 g | 41.15 | 1.26 |

It can be seen from Table 3 that a number of solutions having a FA and HCl were developed that have greater than 37% HCl by weight. The solutions were created by providing an initial aqueous solution, and dissolving HCl gas into the solution. In certain formulations, urea was present in the initial solution and/or added and dissolved with the HCl dissolving process. The formulations in Table 3 have higher HCl concentrations than previously known aqueous HCl formulations at ambient conditions. The fifth solution was formulated with metal organic framework (MOF) particles in the solution. The MOF particles may be removed after the HCl dissolution, or they may be left in the solution.

Without limiting the disclosure to a particular theory of operation, it is believed the FA complexes with the HCl molecules to keep them in solution at higher concentrations than previously known. In certain embodiments, the FA includes a primary amine in the molecule (e.g. as in urea), and in certain embodiments, the FA includes a secondary nitrogen in the molecule (e.g. as in 1,3-dimethyl urea). Without limiting the disclosure to a particular theory of operation, it is believed the MOF particles, or other high surface area particles, temporarily store enough of the HCl bubbling through the solution to provide time for the FA to complex with the HCl molecules and keep them in solution at higher concentrations than previously attainable.

Subjectively, the formulated solution exhibits a very low fume profile, and is not irritating to an operator in the presence of the solution vapor. This contrasts sharply with standard HCl solutions, which are irritating even at low concentrations, and which are significantly more irritating and/or hazardous at higher concentrations. Without being limited to a theory of operation, it is believed that the lower fume profile is due to the greatly reduced vapor pressure of the HCl when complexed with the FA.

The formulations and data in Table 3 illustrate certain principles of the present disclosure. However, a given embodiment of the present disclosure may have a formulation different than those presented in Table 3, and certain embodiments of the present disclosure may not include a formula presented in Table 3. An aqueous solution may include one or more fixing agents, including a mixture of fixing agents. Where more than one FA is present in the aqueous solution, the molar ratio between the FA:HCl may be evaluated from the total sum of the fixing agents present in the solution.

Referencing Fig. 2, data is depicted for an aqueous solution having HCl and a FA relative to an identical HCl solution having chelating ligand based retarder typical of what is used in presently known systems. The data of Fig. 2 indicates the pore-volume to breakthrough (PVBT) for two fluids at various pumping rates, which is the number of pore volumes of solution that are pumped into a core before breakthrough is observed on the opposite end of the core. Some indication of retarded acid reaction rates can be shown where a lower pumping rate provides for the lowest PVBT. It can be seen that the aqueous solution having HCl and a FA (square points 204) displayed significantly retarded reaction rates relative to the typically retarded acid system (triangle points 202) at the temperature (300° C) and HCl concentration of the test. The concentration of HCl in the data taken for Fig. 2 was 15% by weight, lower than an amount exceeding

37% by weight, however it is believed that acid retardation would be exhibited above 37% as well. Comparative data above 37% is not possible, as discussed preceding.

Referencing Fig. 1, a system 100 is depicted having example equipment to treat a formation 108 fluidly coupled to a wellbore 106. The wellbore 106 is depicted as a vertical, cased and cemented wellbore 106, having perforations providing fluid communication between the formation 108 and the interior of the wellbore 106. However, none of the particular features of the wellbore 106 are limiting, and the example is provided only to provide an example context 100 for a procedure.

The system 100 includes a high pressure pump 102 having a source of an oilfield treatment fluid 104. An example oilfield treatment fluid 104 includes an aqueous HCl solution having greater than 15% HCl by weight, and an HCl FA present in a molar ratio of FA:HCl of between 0.5 and 2.5 inclusive. The FA includes urea and/or a urea derivative. The system 100 further includes the high pressure pump 102 fluidly coupled to the wellbore 106, for example through high pressure treating lines 116. The example system 100 includes the formation 108 fluidly coupled to the wellbore 106, and the high pressure pump 102 coupled to a tubing 118 positioned in the wellbore 106. However, the high pressure pump 102 may be fluidly coupled to the wellbore 106 and/or formation 108 through tubing 118, casing, a coiled tubing unit (not shown), and/or an annulus of one or more fluid conduits.

Certain additives (not shown) may be added to the oilfield treatment fluid 104 before or during the treatment. Additives may be added at a blender 110 and/or by any other method. In certain embodiments, a proppant deliver device 112 adds proppant to one or more stages of the fluid during a treatment. An example system 100 further includes a second fluid 114. The second fluid may be a diluting fluid (e.g. lower HCl concentration than the oilfield treatment fluid 104, and/or a concentrated fluid (e.g. higher HCl concentration than the oilfield treatment fluid 104).

A concentrated fluid, where present, includes HCl in an amount exceeding 28% by weight, and may further include a second FA (2FA) present in an molar ratio 2FA:HCl of between 0.25 and 2.0 inclusive. The second FA may include the same or a different FA from the aqueous solution 102, and/or may include FA at a distinct concentration from the aqueous solution. In certain embodiments, the concentrated fluid further includes HCl in an amount exceeding 37% by weight. In certain embodiments, a diluting fluid is added to the oilfield treatment fluid 104, and the combined fluid is provided as the treating fluid to the blender 110 or other device. The diluting fluid may contain no HCl, and/or HCl at a lower concentration than the oilfield treatment fluid 104. The second fluid 114 may additionally or alternatively include any other materials to be added to the oilfield treatment fluid, including additional amounts of the FA, or of another FA (e.g. one having a higher molecular weight). In certain embodiments, the second fluid 114 does not include any FA.

The high pressure pump 102 can treat the wellbore 106 and/or the formation 108, for example by positioning fluid therein, by injecting the fluid into the wellbore 106, and/or by injecting the fluid into the formation 108. An example fluid flow includes flowing the oilfield treatment fluid into the formation at a matrix rate (e.g. a rate at which the formation is able to accept fluid flow through normal porous flow), and/or at a rate which produces a pressure exceeding a hydraulic fracturing pressure. The fluid flow into the formation may be either flowed back out of the formation, and/or flushed away from the near wellbore area with a follow up fluid. Fluid flowed to the formation may be flowed to a pit or containment (not shown), back into a fluid tank, prepared for treatment, and/or managed in any other manner known in the art. Acid remaining in the returning fluid may be recovered or neutralized.

An example system 100 includes a third fluid 122 provided to a second high pressure pump 120 -from a boost pump 124 in the example. An example third fluid 122 is a second oilfield treatment fluid having substantially no HCl and including a third HCl fixing agent (3FA). The 3FA is urea and/or a urea derivative present in an amount between 10% and 55% by weight, inclusive. The 3FA may be the same or a distinct material from the FA in the oilfield treatment fluid 104, and/or from the 2FA where present. An example includes the oilfield treatment fluid 104 being utilized in a first stage of a treatment, and the second oilfield treatment fluid utilized in a second stage of the treatment. The fluid delivery arrangement utilizing the oilfield treatment fluid 104 and the third fluid 122 is optional and non-limiting. In certain embodiments, a single pump may deliver both the oilfield treatment fluid 104 and the third fluid 122. In the example, either the oilfield treatment fluid 104 or the third fluid 122 may be delivered first, and one or more of the solutions 104, 122 may be delivered in multiple stages, including potentially some stages where the solutions 104, 122 are mixed.

Another example system 100 includes the third fluid 122 having HCl in an amount between 7.5% and 28% by weight, inclusive. The third fluid 122 in the example includes substantially no FA present in the third fluid 122. The high pressure pump 102 and/or the second high pressure pump 120 deliver the oilfield treatment fluid 104 and the third fluid 122 in separate stages, with either the oilfield treatment fluid 104 or the third fluid 122 being first. The fluid delivery arrangement utilizing the oilfield treatment fluid 104 and the third fluid 122 is optional and non-limiting. In certain embodiments, a single pump may deliver both the oilfield treatment fluid 104 and the third fluid 122. In the example, either the oilfield treatment fluid 104 or the third fluid 122 may be delivered first, and one or more of the solutions 104, 122 may be delivered in multiple stages, including potentially some stages where the solutions 104, 122 are mixed.

A number of non-limiting examples of an amount of HCl that is "substantially no HCl" are described. An example of substantially no HCl includes a fluid having no detectable HCl, and/or having no HCl intentionally added to the fluid. An example of substantially no HCl includes only an incidental amount of HCl provided, for example with an additive

including HCl. An example of substantially no HCl includes HCl in an amount below 1% by weight, below 0.1% by weight, and/or below 0.01% by weight.

A number of non-limiting examples of an amount of FA that is "substantially no FA" are described. An example of substantially no FA includes a fluid having no detectable FA, and/or having no FA intentionally added to the fluid. An example of substantially no FA includes only an incidental amount of FA provided, for example with an additive including one or more FA materials. Example and non-limiting amounts of an FA that are no substantial amounts of an FA include an FA:HCl ratio in a fluid that is below 0.1 and/or below 0.01.

The schematic flow descriptions which follow provide illustrative embodiments of performing procedures for treating a formation. Operations illustrated are understood to be examples only, and operations may be combined or divided, and added or removed, as well as re-ordered in whole or part, unless stated explicitly to the contrary herein. Certain operations illustrated may be implemented by a computer executing a computer program product on a computer readable medium, where the computer program product comprises instructions causing the computer to execute one or more of the operations, or to issue commands to other devices to execute one or more of the operations.

An example procedure includes an operation to provide an oilfield treatment fluid having an aqueous HCl solution at greater than 15% HCl by weight, and an HCl fixing agent (FA) that includes urea and/or a urea derivative. The FA is present in an amount having a molar ratio of FA:HCl between 0.5 and 2.5 inclusive. The oilfield treatment fluid further includes a viscosifying agent present in an effective amount, where the viscosifying agent is not a plant-based polysaccharide gum. The procedure further includes an operation to provide the oilfield treatment fluid to a high pressure pump, and operating the high pressure pump to treat a formation fluidly coupled to a wellbore. Certain further embodiments of the example procedure are described following.

An example procedure includes operating the high pressure pump to hydraulically fracture the formation. An example procedure further includes an operation to provide the oilfield treatment fluid by adding adding an amount of proppant to the oilfield treatment fluid during one or more stages of the treatment. An example procedure includes the aqueous HCl solution having a treatment concentration of the HCl, where the treatment concentration is between an amount exceeding 15% HCl by weight and 28% HCl by weight inclusive, and where the operation to provide the oilfield treatment fluid further includes diluting a concentrated HCl solution to the treatment concentration of the HCl. The concentrated HCl solution includes HCl in an amount exceeding 28% by weight, and a second HCl fixing agent (2FA) present in a molar ratio of 2FA:HCl between 0.25 and 2.0 inclusive, where the 2FA includes urea and/or a urea derivative. The concentrated HCl solution further includes water present in an amount sufficient to dissolve the HCl and the 2FA. An example procedure further includes the concentrated HCl solution having HCl in an amount exceeding 37% by weight.

An example procedure includes operating the high pressure pump further by treating the formation with a number of fluid stages, where at least one of the fluid stages includes the oilfield treatment fluid. A second fluid stage includes a second oilfield treatment fluid including substantially no HCl and including a third HCl fixing agent (3FA) having urea and/or a urea derivative present in an amount between 10% and 55% by weight, inclusive. The procedure includes performing the second fluid stage either before or after the one of the stages including the oilfield treatment fluid. Additionally, it is contemplated that multiple stages of the treatment may be performed, which stages may be equal or unequal in size or number, and/or which may include spacer fluids or not between any one or more of the stages.

An example procedure includes operating the high pressure pump by treating the formation with a number of fluid stages, where at least one of the fluid stages includes the oilfield treatment fluid, and where a second fluid stage includes a second oilfield treatment fluid having substantially no FA and having HCl present in an amount between 7.5% and 28% by weight, inclusive. The procedure includes performing the second fluid stage either before or after the one of the stages including the oilfield treatment fluid. Additionally, it is contemplated that multiple stages of the treatment may be performed, which stages may be equal or unequal in size or number, and/or which may include spacer fluids or not between any one or more of the stages.

As is evident from the figures and text presented above, a variety of embodiments according to the present disclosure are contemplated.

While the disclosure has provided specific and detailed descriptions to various embodiments, the same is to be considered as illustrative and not restrictive in character. Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

Moreover, in reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire

item unless specifically stated to the contrary. It is the express intention of the applicant not to invoke 35 U.S.C. § 112, paragraph 6 for any limitations of any of the claims herein, except for those in which the claim expressly uses the words 'means for' together with an associated function.

**Claims**

1. An oilfield treatment fluid, comprising:

   an aqueous HCl solution comprising between greater than 15% and 45.7% HCl by weight, inclusive;
   an HCl fixing agent (FA) comprising at least one of urea and a urea derivative, wherein the FA is present in an amount comprising a molar ratio of FA:HCl between 0.5 and 2.5 inclusive; and
   a viscosifying agent present in an effective amount, wherein the viscosifying agent is not a plant-based polysaccharide gum.

2. The oilfield treatment fluid of claim 1, wherein the viscosifying agent comprises at least one viscosifying agent selected from the list consisting of: an acrylamide containing polymer, a sulfonated polymer, xanthan gum, diutan, scleroglucan, and a visco-elastic surfactant.

3. The oilfield treatment fluid of claim 1, wherein the viscosifying agent comprises a cellulose based polymer.

4. The oilfield treatment fluid of claim 1, wherein the viscosifying agent comprises at least one polymer selected from the group consisting of: a cationic polyacrylamide, a sulfonated synthetic polymer slurry, CMHEC, xanthan gum, and an acrylamide copolymer emulsion.

5. The oilfield treatment fluid of claim 4, wherein the HCl is further present in an amount of at least 20% by weight, wherein the FA is further present in a molar ratio of FA:HCl of at least 1, and wherein the oilfield treatment fluid exhibits a linear fluid viscosity of at least 2.5 times a baseline linear fluid viscosity, wherein the baseline linear fluid viscosity comprises a baseline fluid having the same formulation as the oilfield treatment fluid, except that the amount of FA is not present in the baseline fluid.

6. The oilfield treatment fluid of claim 6, wherein the linear fluid viscosity is determined according to Stokes Law by observing a particle settling time.

7. The oilfield treatment fluid of claim 1, wherein the viscosifying agent comprises xanthan gum, wherein the FA is further present in a molar ratio of FA:HCl of at least 1, and wherein the oilfield treatment fluid exhibits a linear gel viscosity that exceeds 400 cp.

8. A method, comprising:

   providing an oilfield treatment fluid including an aqueous HCl solution comprising greater than 15% HCl by weight, an HCl fixing agent (FA) comprising at least one of urea and a urea derivative, wherein the FA is present in an amount comprising a molar ratio of FA:HCl between 0.5 and 2.5 inclusive, a viscosifying agent present in an effective amount, wherein the viscosifying agent is not a plant-based polysaccharide gum;
   providing the oilfield treatment fluid to a high pressure pump; and
   operating the high pressure pump to treat a formation fluidly coupled to a wellbore.

9. The method of claim 8, wherein the operating the high pressure pump further comprises hydraulically fracturing the formation.

10. The method of claim 9, wherein the providing the oilfield treatment fluid further comprises adding an amount of proppant to the oilfield treatment fluid.

11. The method of claim 10:

   wherein the aqueous HCl solution comprises a treatment concentration of the HCl, the treatment concentration comprising a value between greater than 15% HCl by weight and 28% HCl by weight inclusive;
   wherein the providing the oilfield treatment fluid further comprises diluting a concentrated HCl solution to the

treatment concentration of the HCl; and
wherein the concentrated HCl solution comprises: HCl in an amount exceeding 28% by weight, a second HCl fixing agent (2FA) present in a molar ratio of 2FA:HCl between 0.25 and 2.0 inclusive, wherein the 2FA comprises at least one of urea and a urea derivative, and water present in an amount sufficient to dissolve the HCl and the 2FA.

**12.** The method of claim 11, wherein the concentrated HCl solution further comprises HCl in an amount exceeding 37% by weight.

**13.** The method of claim 8:

wherein the operating the high pressure pump further comprises treating the formation with a plurality of fluid stages;
wherein at least one of the plurality of fluid stages includes the oilfield treatment fluid;
wherein a second fluid stage comprises a second oilfield treatment fluid including substantially no HCl and including a third HCl fixing agent (3FA) comprising at least one of urea and a urea derivative present in an amount between 10% and 55% by weight, inclusive; and
wherein the second fluid stage is performed either preceding or following the at least one of the plurality of fluid stages which includes the oilfield treatment fluid.

**14.** The method of claim 8:

wherein the operating the high pressure pump further comprises treating the formation with a plurality of fluid stages;
wherein at least one of the plurality of fluid stages includes the oilfield treatment fluid;
wherein a second fluid stage comprises a second oilfield treatment fluid including substantially no FA and including HCl present in an amount between 7.5% and 28% by weight, inclusive; and
wherein the second fluid stage is performed either preceding or following the at least one of the plurality of fluid stages which includes the oilfield treatment fluid.

**15.** An oilfield treatment fluid, comprising:

an aqueous HCl solution comprising greater than 15% HCl by weight;
an HCl fixing agent (FA) comprising at least one of urea and a urea derivative, wherein the FA is present in an amount comprising a molar ratio of FA:HCl between 0.5 and 2.5, inclusive; and
a viscosifying agent present in an effective amount, wherein the viscosifying agent comprises at least one viscosifying agent selected from the list consisting of: an acrylamide containing polymer, a sulfonated polymer, xanthan gum, diutan, scleroglucan, a cellulose based polymer, and a visco-elastic surfactant.

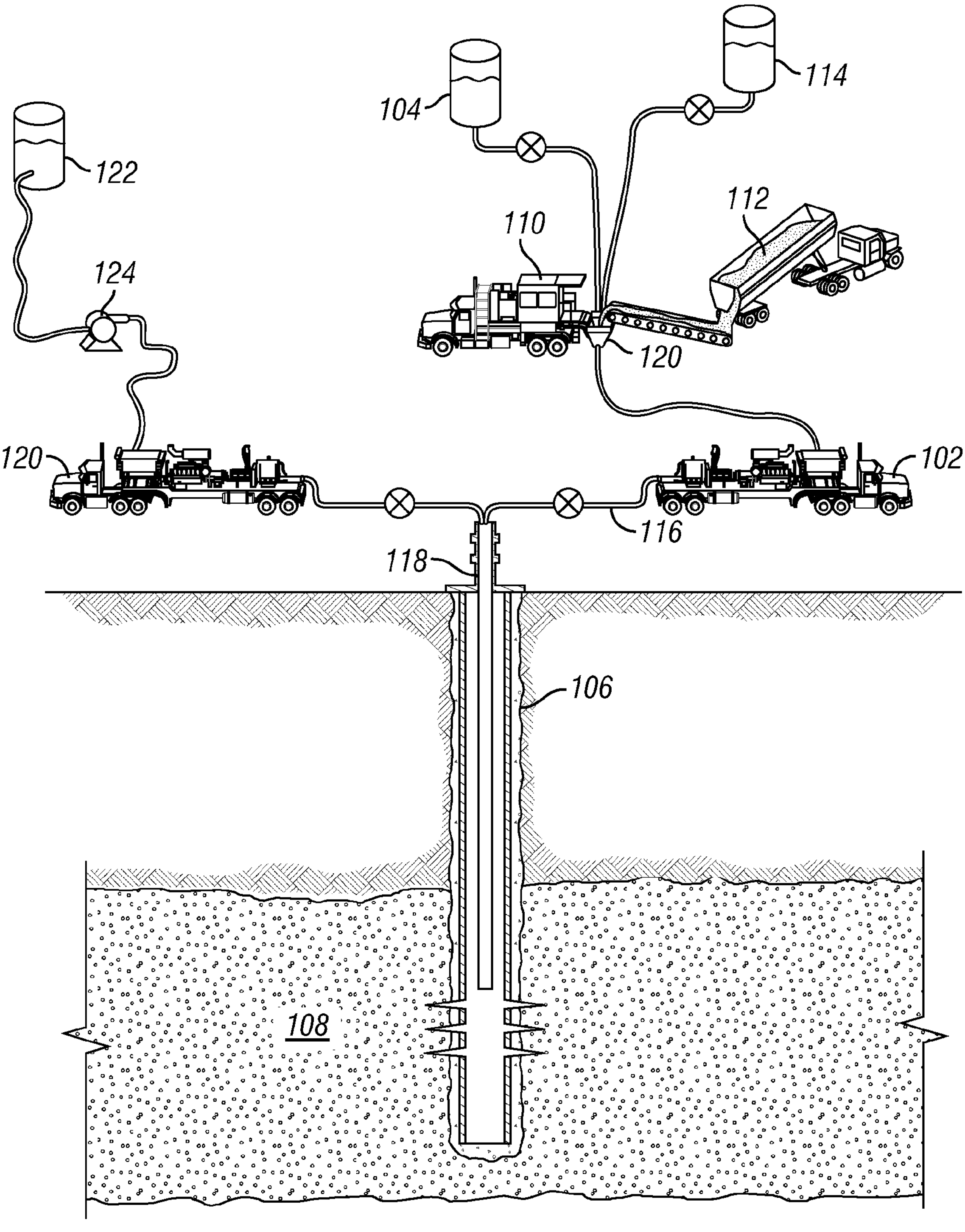


FIG. 1

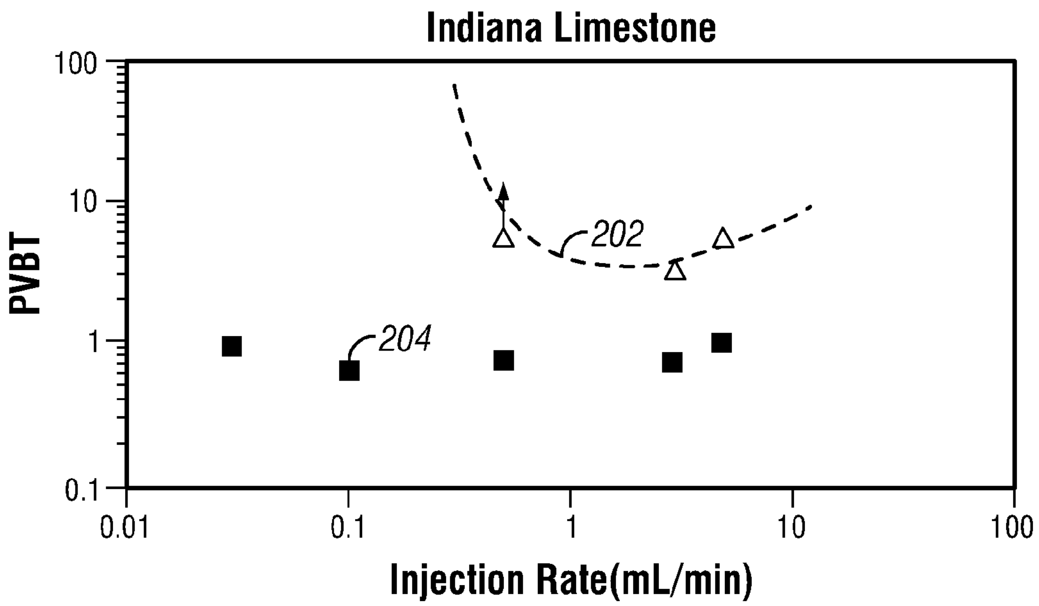
Indiana Limestone
100
10
1
0.1
PVBT
0.01
0.1
1
10
100
Injection Rate(mL/min)
202
204

*FIG. 2*

Europäisches Patentamt
European Patent Office
Office européen des brevets

# EUROPEAN SEARCH REPORT

Application Number
EP 14 17 8660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 4 466 893 A (DILL WALTER R [US]) 21 August 1984 (1984-08-21) * claims * ----- | 1-15 | INV. C09K8/72 C09K8/74 |
| A | EP 0 116 775 A1 (MOBIL OIL CORP [US]) 29 August 1984 (1984-08-29) * claims * ----- | 1-15 | |
| A,P | CN 103 805 158 A (CHINA PETROLEUM & CHEMICAL; SINOPEC RES INST PETROLEUM) 21 May 2014 (2014-05-21) * translated claims * ----- | 1-15 | |
| | | | TECHNICAL FIELDS SEARCHED (IPC) |
| | | | C09K |

The present search report has been drawn up for all claims

1

| Place of search | Date of completion of the search | Examiner |
|---|---|---|
| Munich | 8 December 2014 | Zimpfer, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 17 8660

This annex lists the patent family members relating to the patent documents cited in the above-mentioned European search report. The members are as contained in the European Patent Office EDP file on
The European Patent Office is in no way liable for these particulars which are merely given for the purpose of information.

08-12-2014

| Patent document cited in search report | Publication date | Patent family member(s) | Publication date |
|---|---|---|---|
| US 4466893 A | 21-08-1984 | NONE | |
| EP 0116775 A1 | 29-08-1984 | CA 1210686 A1 | 02-09-1986 |
| | | EP 0116775 A1 | 29-08-1984 |
| CN 103805158 A | 21-05-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4466893 A